# EUROPEAN PATENT APPLICATION

(11) **EP 4 636 543 A1**
(43) Date of publication of application: **22.10.2025**
(21) Application number: 24315194.1
(22) Date of filing: 19.04.2024
(51) Int. Cl.: G06F 3/01, G06T 15/50, G06T 19/00

(54) **METHOD TO MANAGE LIGHT DATA**

(71) Applicant: InterDigital CE Patent Holdings, SAS, 75017 Paris (FR)
(72) Inventor: Jouet, Pierrick, 35000 RENNES (FR); Hirtzlin, Patrice, 35830 BETTON (FR); Lelievre, Sylvain, 35760 MONTGERMONT (FR); Faivre D'Arcier, Etienne, 35750 SAINT GONLAY (FR); Fontaine, Loic, 35530 NOYAL SUR VILAINE (FR); Onno, Stephane, 35760 SAINT GREGOIRE (FR)
(74) Representative: Vossius & Partner Patentanwälte Rechtsanwälte mbB

(57) **Abstract**

Some embodiments of a method may include: establishing an extended reality (XR) session between a user equipment (UE) and a server; configuring the UE with regard to handling of light data associated with an XR space; obtaining the light data; and rendering a virtual scene with the light data locally in the XR space. For some embodiments of the method, configuring the UE may include: determining that lighting of an XR space is required; determining that rendering of the virtual scene with the light data will be done locally by the UE; determining that extraction of the light data will be done by the server; and configuring the UE to receive the light data from the server.

## Description

### INCORPORATION BY REFERENCE

The present application incorporates by reference in their entirety the following applications: European Patent Application Serial No. EP23305520, entitled "METHODS FOR MEASUREMENT OF XR INTERACTIVITY QUALITY OF EXPERIENCE" and filed April 7, 2023 ("'520 application"); European Patent Application Serial No. EP23305514, entitled "MULTI-RENDERER AND COMPUTATION DATA IN SCENE DESCRIPTION" and filed April 7, 2023 ("'514 application"); and European Patent Application Serial No. EP23306330, entitled "AR ANCHORING QUALITY OF EXPERIENCE (QOE) FRAMEWORK" and filed August 3, 2023 ("'330 application").

### BACKGROUND

Knowledge of real light conditions may be used in AR, where virtual objects are seamlessly integrated into the real world. Real light information may be used to enlight or re-enlight virtual objects and to correctly position shadows.

### SUMMARY

An example method/apparatus in accordance with some embodiments may include: establishing an XR session between a user equipment (UE) and a server; configuring the UE with regard to handling of light data associated with an XR space; obtaining the light data; and rendering a virtual scene with the light data locally in the XR space.

For some embodiments of the example method, establishing the XR session is based on capabilities of the UE.

For some embodiments of the example method, establishing the XR session is responsive to receiving a request from the server.

For some embodiments of the example method, configuring the UE comprises: determining that enlightening of the virtual scene by real light sources is required; determining that rendering of the virtual scene with the light data will be done by the UE; determining that extraction of the light data will be done by the server; and configuring the UE to receive the light data from the server.

For some embodiments of the example method, obtaining the light data comprises receiving the light data from the server.

For some embodiments of the example method, configuring the UE comprises: determining that enlightening of the virtual scene by real light sources is required; determining that rendering of the virtual scene with the light data will be done by the UE; and determining that extraction of the light data will be done by the UE.

For some embodiments of the example method, obtaining the light data comprises extracting the light data locally by the UE.

For some embodiments of the example method, configuring the UE further comprises: determining that the light data will be shared; configuring the UE to transmit the light data to the server.

Some embodiments of the example method may further include transmitting the light data to the server.

Some embodiments of the example method may further include transmitting the light data to another device.

For some embodiments of the example method, the light data comprises a lighting model corresponding to at least one object associated with the XR space.

Some embodiments of the example method may further include determining a lighting model corresponding to at least one object associated with the XR space.

For some embodiments of the example method, the lighting model corresponds to a light in a group consisting of: a point light, a spot light, a directional light, an environmental light, and an area light.

For some embodiments of the example method, the XR space is associated with an immersive environment.

An example method/apparatus in accordance with some embodiments may include: a processor; and a memory storing instructions operative, when executed by the processor, to cause the apparatus to perform the any one of the methods listed above.

### BRIEF DESCRIPTION OF THE DRAWINGS

FIG. 1A is a system diagram illustrating an example set of interfaces for a system according to some embodiments.
FIG. 1B is a system diagram illustrating an example set of interfaces for a scene description (stored as an item in gITF.json), three video tracks, an audio track, and a JSON patch update track in an ISOBMFF file according to some embodiments.
FIG. 1C is a system diagram illustrating an example set of interfaces for an MPEG-I node hierarchy supporting elements of scene interactivity according to some embodiments.
FIG. 1D is a schematic plan view illustrating example relationships of extended reality scene description objects according to some embodiments.
FIGs. 2A-2B form a system diagram illustrating an example set of interfaces for Type 2: 5G EDGe-Dependent AR (EDGAR) User Equipment (UE) according to some embodiments.
FIG. 3 is a message sequencing diagram illustrating an example XR spatial compute process.
FIG. 4 is a flowchart illustrating an example process for User Equipment (UE) according to some embodiments.
FIG. 5 is a message sequencing diagram illustrating an example process for light data transmission scenarios according to some embodiments.
FIG. 6 is a flowchart illustrating an example process for configuring a user equipment device according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

### DETAILED DESCRIPTION

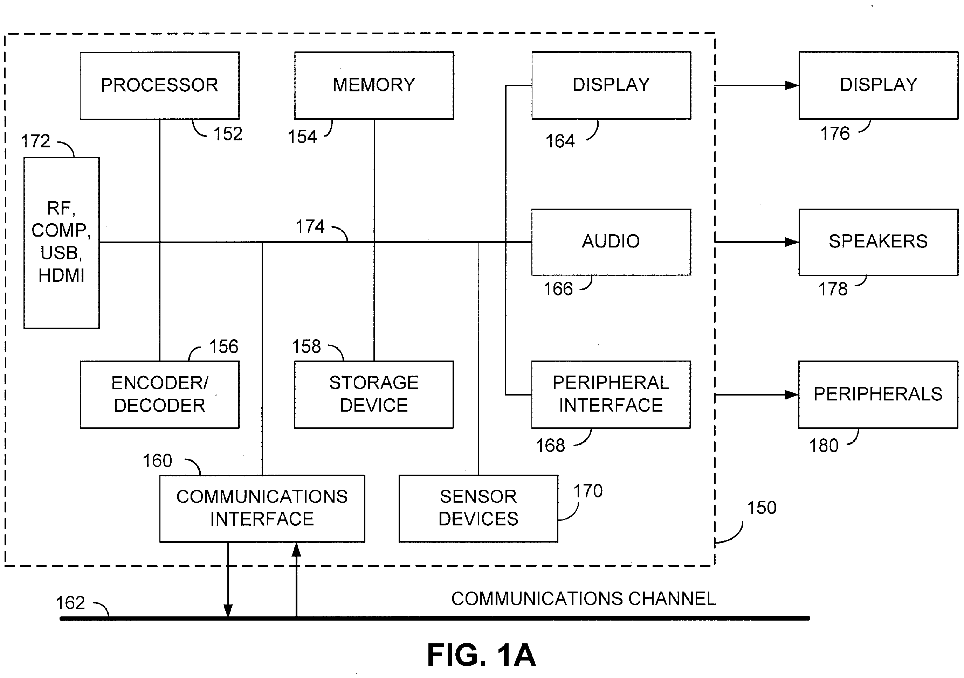

FIG. 1A is a system diagram illustrating an example set of interfaces for a system according to some embodiments. An extended reality display device, together with its control electronics, may be implemented using a system such as the system of FIG. 1A. System 150 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 150, singly or in combination, can be embodied in a single integrated circuit (IC), multiple ICs, and/or discrete components. For example, in at least one embodiment, the processing and encoder/decoder elements of system 150 are distributed across multiple ICs and/or discrete components. In various embodiments, the system 150 is communicatively coupled to one or more other systems, or other electronic devices, via, for example, a communications bus or through dedicated input and/or output ports. In various embodiments, the system 150 is configured to implement one or more of the aspects described in this document.

The system 150 includes at least one processor 152 configured to execute instructions loaded therein for implementing, for example, the various aspects described in this document. Processor 152 may include embedded memory, input output interface, and various other circuitries as known in the art. The system 150 includes at least one memory 154 (e.g., a volatile memory device, and/or a non-volatile memory device). System 150 may include a storage device 158, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 158 can include an internal storage device, an attached storage device (including detachable and non-detachable storage devices), and/or a network accessible storage device, as non-limiting examples.

System 150 includes an encoder/decoder module 156 configured, for example, to process data to provide an encoded video or decoded video, and the encoder/decoder module 156 can include its own processor and memory. The encoder/decoder module 156 represents module(s) that can be included in a device to perform the encoding and/or decoding functions. As is known, a device can include one or both of the encoding and decoding modules. Additionally, encoder/decoder module 156 can be implemented as a separate element of system 150 or can be incorporated within processor 152 as a combination of hardware and software as known to those skilled in the art.

Program code to be loaded onto processor 152 or encoder/decoder 156 to perform the various aspects described in this document can be stored in storage device 158 and subsequently loaded onto memory 154 for execution by processor 152. In accordance with various embodiments, one or more of processor 152, memory 154, storage device 158, and encoder/decoder module 156 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 152 and/or the encoder/decoder module 156 is used to store instructions and to provide working memory for processing that is needed during encoding or decoding. In other embodiments, however, a memory external to the processing device (for example, the processing device can be either the processor 152 or the encoder/decoder module 152) is used for one or more of these functions. The external memory can be the memory 154 and/or the storage device 158, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 150 can be provided through various input devices as indicated in block 172. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia interface (HDMI) input terminal. Other examples, not shown in FIG. 1A, include composite video.

In various embodiments, the input devices of block 172 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv)demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 150 to other electronic devices across USB and/or HDMI connections. It is to be understood that various aspects of input processing, for example, Reed-Solomon error correction, can be implemented, for example, within a separate input processing IC or within processor 152 as necessary. Similarly, aspects of USB or HDMI interface processing can be implemented within separate interface ICs or within processor 152 as necessary. The demodulated, error corrected, and demultiplexed stream is provided to various processing elements, including, for example, processor 152, and encoder/decoder 156 operating in combination with the memory and storage elements to process the datastream as necessary for presentation on an output device.

Various elements of system 150 can be provided within an integrated housing, Within the integrated housing, the various elements can be interconnected and transmit data therebetween using suitable connection arrangement 174, for example, an internal bus as known in the art, including the Inter-IC (I2C) bus, wiring, and printed circuit boards.

The system 150 includes communication interface 160 that enables communication with other devices via communication channel 162. The communication interface 160 can include, but is not limited to, a transceiver configured to transmit and to receive data over communication channel 162. The communication interface 160 can include, but is not limited to, a modem or network card and the communication channel 162 can be implemented, for example, within a wired and/or a wireless medium.

Data is streamed, or otherwise provided, to the system 150, in various embodiments, using a wireless network such as a Wi-Fi network, for example IEEE 802.11 (IEEE refers to the Institute of Electrical and Electronics Engineers). The Wi-Fi signal of these embodiments is received over the communications channel 162 and the communications interface 160 which are adapted for Wi-Fi communications. The communications channel 162 of these embodiments is typically connected to an access point or router that provides access to external networks including the Internet for allowing streaming applications and other over-the-top communications. Other embodiments provide streamed data to the system 150 using a set-top box that delivers the data over the HDMI connection of the input block 172. Still other embodiments provide streamed data to the system 150 using the RF connection of the input block 172. As indicated above, various embodiments provide data in a non-streaming manner. Additionally, various embodiments use wireless networks other than Wi-Fi, for example a cellular network or a Bluetooth network.

The system 150 can provide an output signal to various output devices, including a display 176, speakers 178, and other peripheral devices 180. The display 176 of various embodiments includes one or more of, for example, a touchscreen display, an organic light-emitting diode (OLED) display, a curved display, and/or a foldable display. The display 176 can be for a television, a tablet, a laptop, a cell phone (mobile phone), or other device. The display 176 can also be integrated with other components (for example, as in a smart phone), or separate (for example, an external monitor for a laptop). The other peripheral devices 180 include, in various examples of embodiments, one or more of a stand-alone digital video disc (or digital versatile disc) (DVR, for both terms), a disk player, a stereo system, and/or a lighting system. Various embodiments use one or more peripheral devices 180 that provide a function based on the output of the system 150. For example, a disk player performs the function of playing the output of the system 150.

In various embodiments, control signals are communicated between the system 150 and the display 176, speakers 178, or other peripheral devices 180 using signaling such as AV.Link, Consumer Electronics Control (CEC), or other communications protocols that enable device-to-device control with or without user intervention. The output devices can be communicatively coupled to system 150 via dedicated connections through respective interfaces 164, 166, and 168. Alternatively, the output devices can be connected to system 150 using the communications channel 162 via the communications interface 160. The display 176 and speakers 178 can be integrated in a single unit with the other components of system 150 in an electronic device such as, for example, a television. In various embodiments, the display interface 164 includes a display driver, such as, for example, a timing controller (T Con) chip.

The display 176 and speaker 178 can alternatively be separate from one or more of the other components, for example, if the RF portion of input 172 is part of a separate set-top box. In various embodiments in which the display 176 and speakers 178 are external components, the output signal can be provided via dedicated output connections, including, for example, HDMI ports, USB ports, or COMP outputs.

The system 150 may include one or more sensor devices 168. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 150 is used as the control module for an extended reality display (such as control modules 124, 132), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 152 or by hardware, or by a combination of hardware and software. As a non-limiting example, the embodiments can be implemented by one or more integrated circuits. The memory 154 can be of any type appropriate to the technical environment and can be implemented using any appropriate data storage technology, such as optical memory devices, magnetic memory devices, semiconductor-based memory devices, fixed memory, and removable memory, as non-limiting examples. The processor 152 can be of any type appropriate to the technical environment, and can encompass one or more of microprocessors, general purpose computers, special purpose computers, and processors based on a multi-core architecture, as non-limiting examples.

### Scene Description Framework for XR

in some embodiments, examples disclosed herein may be used in the domain of rendering of extended reality scene description and extended reality rendering. For some embodiments, for example, the present application may be applied in the context of the formatting and the playing of extended reality applications when rendered on end-user devices such as mobile devices or Head-Mounted Displays (HMD). For some example embodiments, glTF material may be rendered in a 3D environment that is rendered through a 2D screen. The examples presented herein in accordance with some embodiments are not limited to XR applications.

In XR applications, a scene description is used to combine explicit and easy-to-parse description of a scene structure and some binary representations of media content.

In time-based media streaming, the scene description itself can be time-evolving to provide the relevant virtual content for each sequence of a media stream. For instance, for advertising purpose, a virtual bottle can be displayed during a video sequence where people are drinking.

This kind of behavior can be achieved by relying on the framework defined in the Scene Description for MPEG media document, Information technology - Coded representation of immersive media - Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

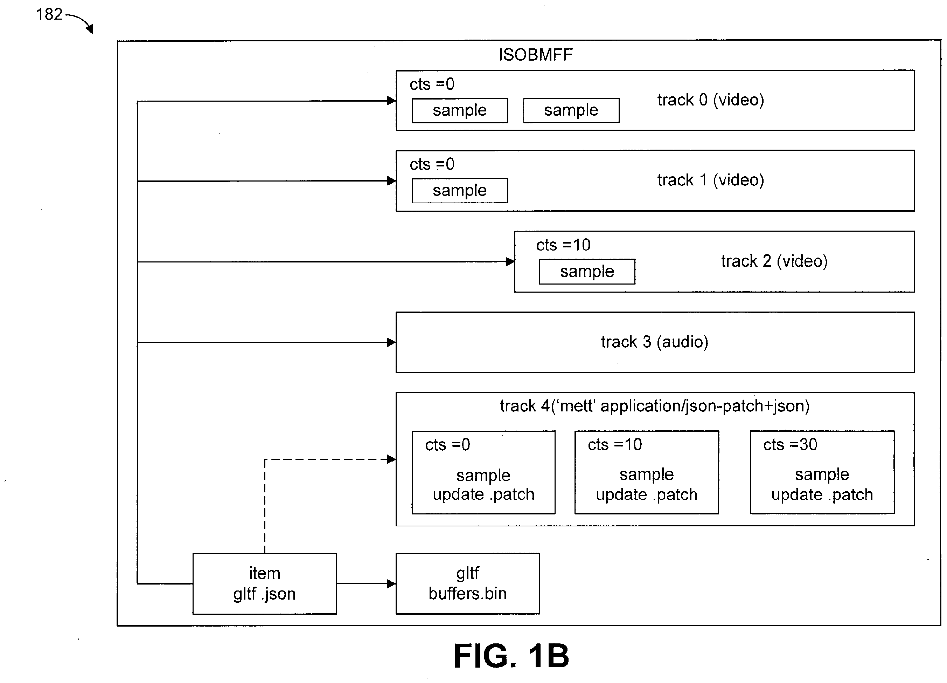

FIG. 1B is a system diagram illustrating an example set of interfaces for a scene description (stored as an item in gITF.json), three video tracks, an audio track, and a JSON patch update track in an ISOBMFF file 182 according to some embodiments.

### Runtime Interactivity

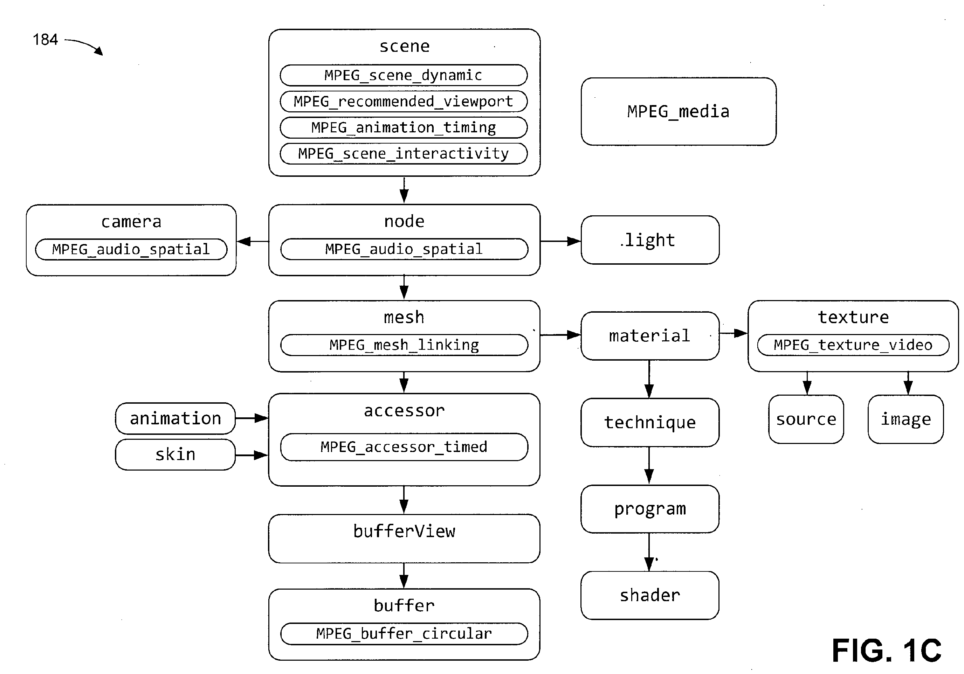

FIG. 1C is a system diagram illustrating an example set of interfaces for an MPEG-I node hierarchy 184 supporting elements of scene interactivity according to some embodiments.

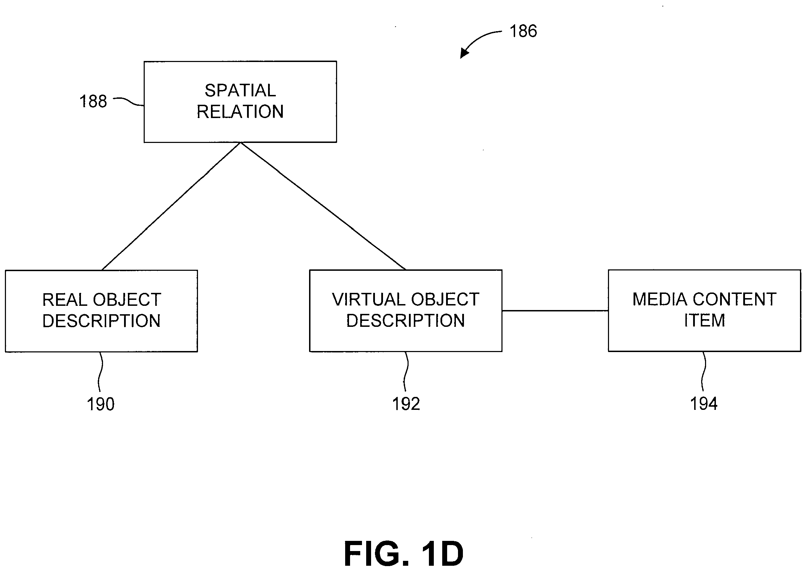

FIG. 1D is a schematic plan view illustrating example relationships of extended reality scene description objects according to some embodiments. In this example, the scene graph 186 includes a description of a real object 190, for example 'plane horizontal surface' (that can be a table or the floor or a plate) and a description of a virtual object 192, for example an animation of a walking character. Scene graph node 192 is associated with a media content item 194 that is the encoding of data used to render and display the walking character (for example as a textured animated 3D mesh). Scene graph 186 also includes a node 188 that is a description of the spatial relation between the real object described in node 190 and the virtual object described in node 192. In this example, node 188 describes a spatial relation to make the character walk on the plane surface. When the XR application is started, media content item 194 is loaded, rendered and buffered to be displayed when triggered. When a plane surface is detected in the real environment by sensors (or a camera for some embodiments), the application displays the buffered media content item as described in node 188. The timing is managed by the application according to features detected in the real environment and to the timing of the animation. A node of a scene graph may also include no description and only play a role of a parent for child nodes.

XR applications are various and may apply to different context and real or virtual environments. For example, in an industrial XR application, a virtual 3D content item (e.g. a piece A of an engine) is displayed when a reference object (piece B of an engine) is detected in the real environment by a camera rigged on a head mounted display device. The 3D content item is positioned in the real-world with a position and a scale defined relatively to the detected reference object.

For example, in an XR application for interior design, a 3D model of a furniture is displayed when a given image from the catalog is detected in the input camera view. The 3D content is positioned in the real-world with a position and scale which is defined relatively to the detected reference image. In another application, some audio file might start playing when the user enters an area which is close to a church (being real or virtually rendered in the extended real environment). In another example, an ad jingle file may be played when the user sees a can of a given soda in the real environment. In an outdoor gaming application, various virtual characters may appear, depending on the semantics of the scenery which is observed by the user. For example, birds characters are suitable for trees, so if the sensors of the XR device detect real objects described by a semantic label 'tree', birds can be added flying around the trees. In a companion application implemented by smart glasses, a car noise may be launched in the user's headset when a car is detected within the field of view of the user camera, in order to warn him of the potential danger; Furthermore, the sound may be spatialized in order to make it arrive from the direction where the car was detected.

An XR application may also augment a video content rather than a real environment. The video is displayed on a rendering device and virtual objects described in the node tree are overlaid when timed events are detected in the video. In such a context, the node tree includes only virtual objects descriptions.

Example embodiments are described with reference to the scope of the MPEG-I Scene Description framework using the Khronos glTF extension mechanism, which supports additional scene description features, such as a node tree. However, the principles described herein are not limited to a particular scene description framework.

In an example embodiment, the glTF scene description is extended to support interactivity. The interactivity extension applies at the glTF scene level and is called MPEG scene_interactivity. See the document ISO/IEC 23090-14, *CDAM 2: Support for Haptics, Augmented Reality, Avatars, Interactivity, MPEG-1 Audio, and Lighting,* ISO/IEC JTC 1/SC 29/WG 03 N00797 (*"MPEG Extension").*

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / gITF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

A User Equipment (UE)' may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. in addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

Knowledge of real light conditions may be used in AR, where virtual objects are seamlessly integrated into the real world. Real light information may be used to enlight or re-enlight virtual objects and to correctly position shadows.

Real light data provides different parameters that represent different characteristics of a light source. Such parameters may be used to instantiate a virtual light (a virtual representation of a real light) with the same properties and get consistency between real and virtual scene.

A virtual light may be set at the same place as a real light. The pose of the real light relative to an XR space is computed. XR space is a representation of the 3D space. XR space is defined by an origin and axes. In XR applications, different types of light with specific properties may include: point light, spot light, directional light, environmental light, and area light.

A point light is a light that is located at a point in the scene and that emits light in all directions equally. A point light may have a specified range, and only objects within this range are affected.

A spot light is a light that is located at a point in the scene and that emits light in a cone shape. A spot light emits light in one direction that is constrained to a specific angle, resulting in a cone-shaped region of light.

A directional light is a light that is located infinitely far away and that emits light in only one direction.

An area light is a light that is defined by a rectangle or disc in the scene and that emits light in all directions uniformly across its surface area but from only one side of the rectangle or disc.

An environmental light is a light composed of image(s) of the surrounding environment including light sources. Several formats may be used for the image(s). For a cube map, an environment is projected onto the faces of a cube and stored as six square images, An equirectangular image results from the projection of the surface of a spherical environment map.

In XR applications, a scene description may be used to combine explicit and "easy-to-parse" descriptions of a scene structure and some binary representations of media content. Typical scene description languages, like glTF, allow the description of light sources of different types. A scene description may be used to transmit light data. Real light data is generally extracted from images of the environment and captured by a camera in all directions.

Thanks to various embedded sensors and display characteristics, a UE may collect information on the user environment and/or estimate several real light sources characteristics (such as position, color, and intensity, among other characteristics). This data allows the UE to render properly a 3D scene on the UE display. A depth map captured by depth camera(s) may be used to compute the position of the light source. Other external UEs, such as light probes or luxmeters, may be used to estimate light information.

### Framework / API

The framework ARKit is understood to implement algorithms to extract light data according to developer webpage *ARLightEstimate,* APPLE, *available at:* developer<dot>apple<dot>com/documentation/arkit/arlightestimate. Similarly, ARCore is understood to implement algorithms to extract light data according to developer webpage *Get the Lighting Right,* GOOGLE, *available at:* developers<dot>google<dot>com/ar/develop/lighting-estimation.

The specification *The OpenXR Specification,* KHRONOS, *available at:* registry<dot>khronos<dot>org/OpenXR/specs/1<dot>0/htmi/xrspec<dot>html ("OpenXR") provides a cross-platform access directly into diverse XR device runtimes across multiple platforms. *OpenXR* enables applications and engines to run on any system that exposes the OpenXR API. Several extensions of OpenXR address scene capture (e.g., extensions from Microsoft and Facebook) but, as understood, none address the capture of light in a scene.

As understood, nothing is specified in the OpenXR API for lights extraction, but future extensions may be defined, which may allow: to start the extraction/scan of real light if the feature is supported by the XR UE; to get the position of a light source related to an XRSpace; to get the type of the light and all its parameters; and to set a refresh frequency. Such future extensions may be similar to those related to the capture (or scan) of a real scene (e.g, Microsoft or Facebook OpenXR extensions). The functionalities of light capture are a part of the scene understanding.

### 3GPP EDGAR

The technical specification (TS) Support of 5G Glass-type Augmented Reality / Mixed Reality (AR/MR) Devices, 3GPP, TS 26.998, v. 18.0.0 ("TR 26.998") addresses 5G Edge dependent AR UE (3GPP EDGAR).

Use cases for which the data may be transmitted to the server (uplink) may include: split rendering (rendering on the server side); split computing (extraction on the server side); and shared experience (more than one user, extraction is done by one user, the result is sent by the server to others). Shared experience also may be applicable to 3GPP stand-alone -> STAR.

Extraction of light data is a part of XR Spatial Compute. 3GPP EDGAR encompasses this process. In other words, the "XR Spatial Computing" function may include, among other things, the light extraction function.

XR Spatial Computing relates to AR functions that process sensor data to generate information about the world 3D space surrounding the AR user. XR Spatial Computing includes functions such as SLAM for spatial mapping (creating a map of the surrounding area) and localization (establishing the position of users and objects within that space), 3D reconstruction, and semantic perception.

Spatial computing includes functions such as tracking (to estimate the movement of the AR device at a high frequency), relocalization (to estimate the pose of the AR device), mapping (to reconstruct the surrounding space), and semantic perception (to process the captured information into semantical concepts). The resulting output of spatial computing is a set of spatial mapping information that is organized in a data structure called, the XR Spatial Description, for storing and exchanging the information.

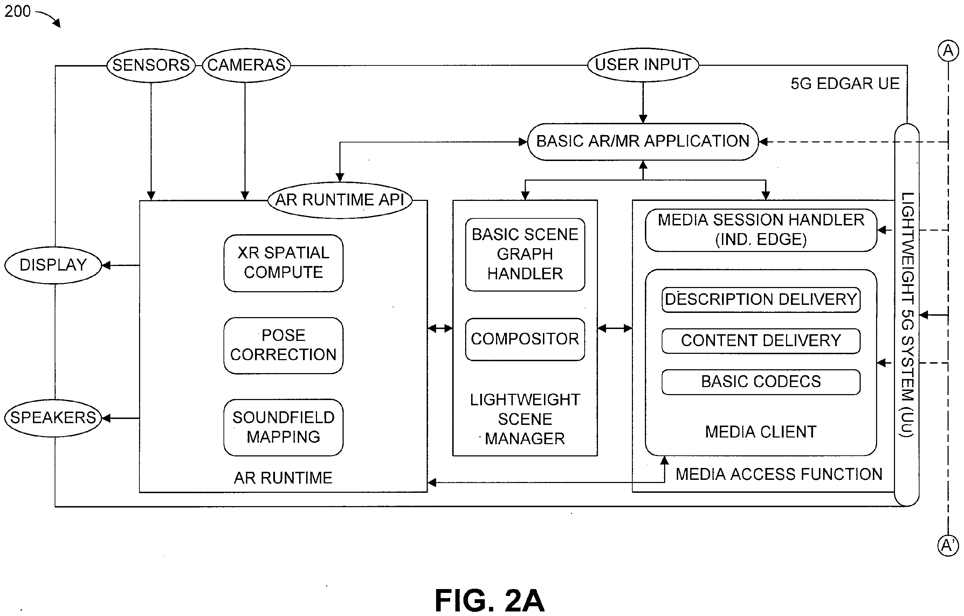

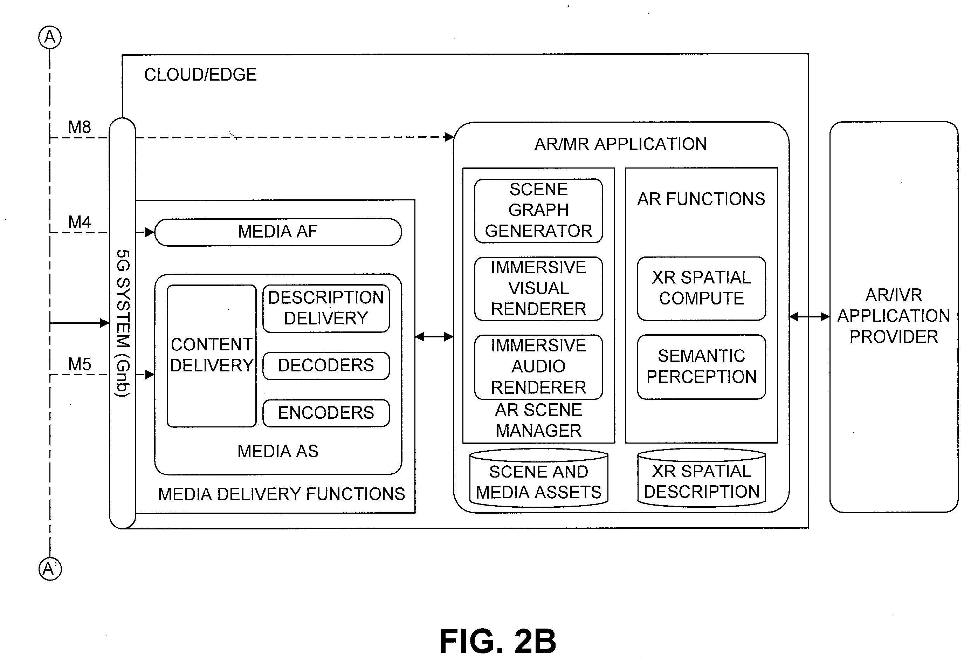

FIGs. 2A-2B form a system diagram illustrating an example set of interfaces for Type 2: 5G EDGe-Dependent AR (EDGAR) User Equipment (UE) according to some embodiments. The 3GPP TSG SA WG4 (SA4) has studied different architectures for enabling XR experiences. Different degrees of workflow split between the AR devices and the Cloud/Edge are defined in the technical specification TR 26.998. The SR_MSE relies on the 5G Edge dependent AR UE (EDGAR) architecture 200 shown in FIG. 2, where most of the XR functions, especially the rendering, are performed on the Cloud/Edge.

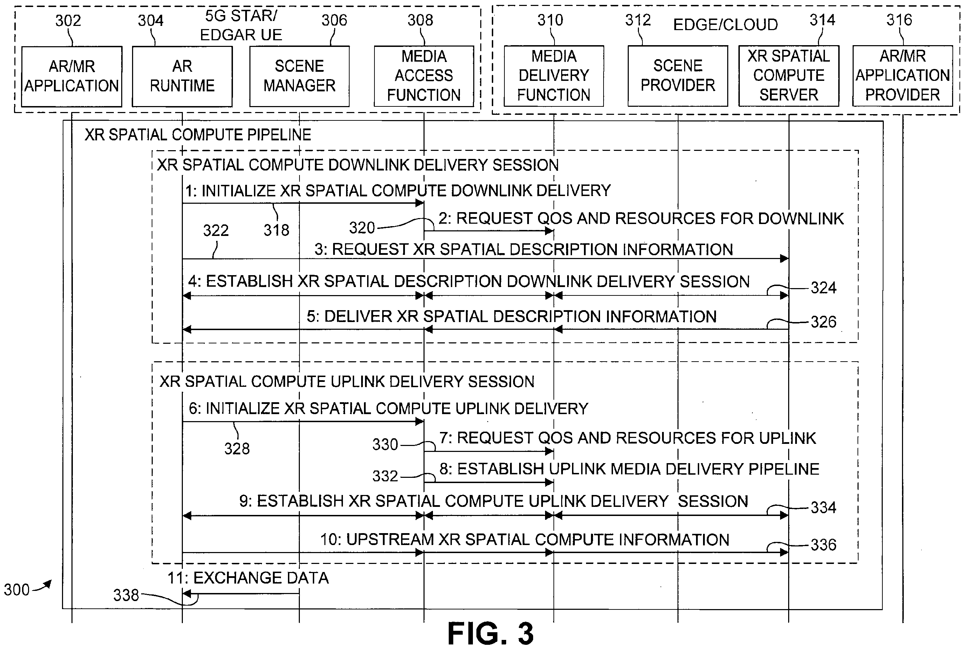

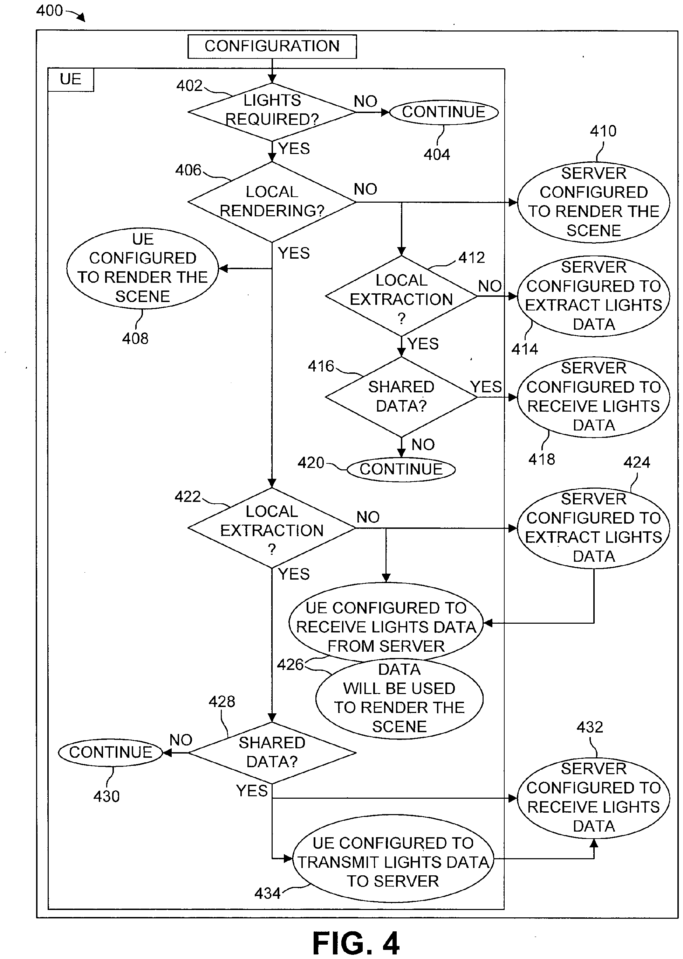

FIG. 3 is a message sequencing diagram illustrating an example XR spatial compute process. FIG. 3 shows an example XR session setup. See Figure 4.3.3-1 Functional diagram for XR Spatial Compute Pipeline from 26998-v18.0.0.

For some embodiments of an example XR spatial compute process 300, an AR Runtime process 304 sends a message to the Media Access Function 308 to initialize 318 XR Spatial Compute downlink delivery. The Media Access Function 308 sends a message to the Media Delivery Function 310 to request 320 QoS and resources for downlink. The AR Runtime process 304 sends a message to the XR Spatial Compute Server 314 to request 322 XR spatial description information. Communication occurs between the AR Runtime 304 and the Media Access Function 308, between the Media Access Function 308 and the Media Delivery Function 310, and between the Media Delivery Function 310 and the XR Spatial Compute Server 314 to establish 324 XR spatial description downlink delivery session. The XR Spatial Compute Server 314 delivers 326 XR spatial description information to the Media Delivery Function 310, which is passed on to the Media Access Function 308 and then to the AR Runtime 304.

For some embodiments of the example XR spatial compute process 300, the AR Runtime process 304 sends a message to the Media Access Function 308 to initialize 328 XR Spatial Compute uplink delivery. The Media Access Function 308 sends a message to the Media Delivery Function 310 to request 330 QoS and resources for uplink. The Media Access Function 308 sends a message to the Media Delivery Function 310 to establish 332 uplink media delivery pipeline. Communication occurs between the AR Runtime 304 and the Media Access Function 308, between the Media Access Function 308 and the Media Delivery Function 310, and between the Media Delivery Function 310 and the XR Spatial Compute Server 314 to establish 334 XR spatial description uplink delivery session. The AR Runtime 304 upstreams 336 XR spatial compute information to the Media Access Function 308, which is passed on to the Media Delivery Function 310 and then to the XR Spatial Compute Server 314.

For some embodiments of the example XR spatial compute process 300, the AR Runtime process 304 exchanges 338 data with the Scene Manager 306.

For some embodiments, a 5G STAR/EDGAR User Equipment (UE) device may include an AR/MR Application 302. For some embodiments, an Edge/Cloud device may include a Scene Provider 312 and/or an AR/MR Application Provider 316.

### Problem Statement

Different types of lights have already been defined in different standards. For instance, the gITF scene description specification allows a content creator to describe light sources (either a virtual light or a representation of a real light) in an XR scene. A UE receiving such a scene description file from the server in a downlink (DL) direction may instantiate virtual lights from the described parameters and render the virtual scene with a correct lighting.

Concerning the extraction of real lights by the application, some frameworks may do the job, but, as understood, there is nothing in network standards, like 3GPP, to configure the extraction of real light data through an AR Runtime object. Also, there is no format to transmit light data between the UE and the server in the uplink (UL) direction or between the server and the UE in the downlink (DL) direction. Likewise, there is no format to outsource extraction of light to the server.

Depending on the device capabilities, the application may need to delegate the computation of light data to a server. The following use cases require light data transmission in the UL direction: split rendering, split computing, and shared experience. Therefore, in network standards, like 3GPP, there is a need for a mechanism to configure, capture, format, and transmit light data.

This application discusses: an initialization of the session with a display of UE capabilities; a configuration step; and a runtime step.

The mechanisms defined, for example, in 3GPP, may be used to transmit light data between User Equipment (UE) and a server based on the UE's capabilities.

During configuration, the following different scenarios (set during initialization) are considered: (1) The rendering is done by the server or by the UE; (2) The extraction of lights is done by the server or by the UE; and (3) Light data is transmitted to the server / UE.

### Session Initialization

The UE establishes an XR session locally under two scenarios: (1) based on a request from the server; and (2) based on the device (UE) capabilities. Such message exchanges contain at least the information that the real light estimation is to be launched.

In some embodiments, the server sends to the UE a message indicating a requirement for lighting of the virtual scene (Table 1), and the UE replies to the server by indicating its capabilities (Table 2). The message indicating a requirement for lighting may be sent from the server in a downlink delivery session.

in some embodiments, the UE sends to the server a message indicating a requirement for lighting of the virtual scene (Table 1), and the UE sends to the server a message indicating its capabilities (Table 2). The message indicating a requirement for lighting may be sent by the UE in an uplink delivery session.

For some embodiments of a shared AR experience, the SharedData parameter, which indicates that light data must be transmitted to the server, may not be used. The transmission assumes that the extraction is done locally.

### Initialization Message

An initialization message may be configured as shown in Table 1. The parameters of the message include the fields LightsRequired and SharedData. If the field LightRequired is true, the virtual scene will be enlightened by real light sources. The initialization message (a request) of Table 1 may be sent from the server or from the UE. If the field SharedData: is true, the light data will be transmitted to the other UEs that share the same XR experience.

**Table 1.**

| **Name** | **Type** | **Cardinality** | **Description** |
|---|---|---|---|
| LightsRequired | bool | 1..1 | Lights must be evaluated |
| SharedData | bool | 0..1 | If lights extraction is made locally, a true value indicates that the light data must be transmitted to the server |

### Capabilities Message

A UE capabilities message may be configured as shown in Table 2. The parameters of the message include the fields LocalExtraction and Rendering. If the field LocalExtraction is true, the UE may extract light data. If the field Rendering is true, the UE may render the scene. The rendering may be part of another negotiation (split rendering).

**Table 2.**

| **Name** | **Type** | **Cardinality** | **Description** |
|---|---|---|---|
| LocalExtraction | bool | 1..1 | If true, light data extraction will be made by UE. |
| Rendering | bool | 1..1 | If true, scene will be render by UE. |

### Configuration

FIG. 4 is a flowchart illustrating an example process for User Equipment (UE) according to some embodiments. For an example configuration process 400, determination 402 of whether lights are required is performed. If lights are not required, then the process 400 exits to continue 404 performing other tasks. If lights are required, then a determination 406 of whether local rendering is to be performed. If local rendering is to be performed, then the UE is configured 408 to render the scene. A determination 422 is performed to determine if local extraction is to be performed. If local extraction is not to be performed, then a server is configured 424 to extract light data, and the user equipment is configured 426 to receive light data from the server. Such light data is used render the scene. If local extraction is to be performed, then a determination 428 is performed to determine if there is shared data. If there is no shared data, then the process 400 exits to continue 430 performing other tasks. If there is shared data, then the server is configured 432 to receive light data, and the user equipment is configured 434 to transmit light data to the server.

If the determination 406 determined that local rendering is not to be performed, then the server is configured 410 to render the scene. A determination 412 is performed to determine if local extraction is to be performed. If local extraction is not to be performed, then a server is configured 414 to extract light data. If local extraction is to be performed, then a determination 416 is performed to determine if there is shared data. If there is no shared data, then the process 400 exits to continue 420 performing other tasks. If there is shared data, then the server is configured 418 to receive light data. For some embodiments, the UE may be configured to send light data to the server (not shown in FIG. 4).

During configuration process, messages are exchanged between the UE and the server to initialize the transmission of light data. Exchanged information may concern: the type of light to be evaluated; the lights parameters to be evaluated (Table 5); the frequency at which light is to be evaluated; and the XR Space.

Depending on its capabilities and initialization session, the UE will extract light data, transmit light data to the server, and/or render the scene (FIG. 4).

In some embodiments, the server initiates the configuration and sends a configuration message. For example, this configuration may occur when extraction and rendering are done on server side.

In some embodiments, the UE initiátes the configuration and sends a configuration message. Depending on this configuration message, configuration data exchanges are adapted.

### Configuration Parameters

A configuration message may be configured as shown in Table 4 and Table 9. The configuration parameters are the fields: RefreshOccurrence, xrSpace, and an array of LightData,or RawData. The array of LightData is described in Table 4. The array of RawData is described in Table 9.

The RefreshOccurrence field indicates the lights extraction rate. See Table 8.

The xrSpace field indicates an identifier of a base space in which a light pose may be expressed. An XR Space is a frame of reference in which 3D coordinates are expressed. An AR application requires a seamless insertion of virtual content into the user's real environment. Such an AR application relies on the Anchor, Trackable, and XR Space concepts, which are defined in 3GPP technical specification *Device Media Capabilities for Augmented Reality Services,* 3GPP, TS 26.119, Release 18. An XR Space is a representation of 3D space. An XR Space is defined by an origin and axes.

The LightData field indicates the type of light and associated parameters. See Table 5.

The RawData field indicates raw data transmitted to the server to extract lights parameters. See Tables 9 and 10. For example, RawData may be images with poses and timestamp(s).

### Configuration Message Format: Light Data

The format of the Configuration Message shown in Table 4 is to be used if light data is to be transmitted. Configurations parameters are negotiated between the UE and the server. This negotiation includes defining common XR spaces and defining and selecting lights parameters in case they are transmitted. The format is capable of being extended to support the exchange of additional/future configuration information.

The configuration is done during the XRSpatial downlink and uplink delivery sessions. See FIG. 3. For example, in technical specification Split Rendering Media Service Enabler, 3GPP, TS 26.565, v. 1.0.0 ("TS 26.565"), the message may be identified by an urn: urn:3gpp:(xxxxxx-:xx:configurelightdatas). The configuration format describes the data format.

The session configuration information is in JSON format. For example, the intensity field may be a float value in which the intensity is mandatory (cardinality = 1..1). See the code listing example in Table 3.

| |
|---|
| ```
 "intensity": {
       "type": "float",
       "cardinality: "1..1"
 } 
``` |

**Table 3.**

Table 4 provides details regarding a configuration message with light data.

**Table 4.**

| **Name** | | **Type** | **Cardinality** | **Description** |
|---|---|---|---|---|
| RefreshOccurrence | | enum | 1..1 | One of the defined values of Table 8. indicates when and/or rate at which the light data is to be extracted. |
| If (RefreshOccurrence == EVERY_N_FRAMES){ | | | | |
| N | | Number | 1..1 | The value of N |
| } | | | | |
| If (RefreshOccurrence == EVENT_BASED){ | | | | |
| event | | ID | | ID of the event (used to trigger the refresh process) |
| } | | | | |
| xrSpace | | ID | 1..1 | ID of the XRSpace used to express the 3D coordinates of the light |
| LightDatas | | Array | 1..1 | Array of light configuration objects giving for each type of lights, the parameters that must be extracted. |
| | LightData | Object | 0..5 | See Table 5. |

Table 5 provides details regarding a LightData configuration object and handling for different light types. In some embodiments, if the Lights array is empty, all types of lights found in the scene are extracted.

**Table 5.**

| **Name** | **Type** | **Cardinality** | **Description** |
|---|---|---|---|
| type | enum | | The type of the light (Table 6 ) |
| MaximumNumberOfLights | number | 0..1 | The max number of lights of this type to extract. |
| If (type == PointLight){ | | | |
| pose | Array (16 floats) | 1..1 | Format of the pose of the light. |
| color | Vec3f | 0..1 | Format of color (RGB value) |
| temperature | float | 0..1 | Format of Temperature value |
| Intensity | float | 1..1 | Format of Intensity value |
| range | float | 0..1 | Format of Range value |
| } | | | |
| If (type == SpotLight){ | | | |
| pose | Array (16 floats) | 1..1 | Format of the pose of the light. |
| color | Vec3f | 0..1 | Format of color (RGB value) |
| temperature | float | 0..1 | Format of Temperature value |
| Intensity | float | 1..1 | Format of Intensity value |
| innerConeAngle | float | 0..1 | Format of Angle(radians) |
| outerConeAngle | float | 0..1 | Format of Angle, in radians (spot only) |
| } | | | |
| If (type == DirectionalLight){ | | | |
| direction | Vec3f | 1..1 | Format of Direction of the light) |
| color | Vec3f | 0..1 | Format of color (RGB value) |
| temperature | float | 0..1 | Format of Temperature value |
| Intensity | float | 1..1 | Format of Intensity value |
| } | | | |
| If (type == AreaLight){ | | | |
| pose | Array (16 floats) | 1..1 | Format of the pose of the light. |
| color | Vec3f | 0..1 | Format of color (RGB value) |
| temperature | float | 0..1 | Format of Temperature value |
| Intensity | float | 1..1 | Format of Intensity value |
| Texture / image | Texture | 1..1 | Texture associated with the light. |
| | | | May be image or video |
| Format | enum | 1..1 | These may be: IMAGE or VIDEO. |
| ShapeType | enum | 1..1 | These may be: RECT, DISK, or SPHERE. |
| If (ShapeType == RECT){ | | | |
| width | float | 1..1 | Format of width |
| height | float | 1..1 | Format of height |
| } | | | |
| If (ShapeType == DISK){ | | | |
| radius | float | 1..1 | Format of radius |
| } | | | |
| If (ShapeType == SPHERE){ | | | |
| radius | float | 1..1 | Format of radius |
| } | | | |
| } | | | |
| If (type == EnvLight){ | | | |
| ImageProjectionType | enum | 1..1 | These may be CUBEMAP or EQUIRECTANGULAR (Table 7) |
| rotation | Vec4f | 1..1 | Format of rotation of the IBL environment. (Quaternion) |
| intensity | float | 0..1 | Format of Brightness multiplier for environment. |
| SphericalHarmonic | Array (27 floats) | | Format of spherical harmonic coefficients for irradiance up to I=2. This is a 9x3 array. |
| Textures/Images | Array of Textures | | If (ImageProjectionType == CUBEMAP), then Textures/Images is an array of 6 images/ video, one for each cube face. |
| | | | In some embodiments, the array of 6 images/video is grouped into one image / video (thumbnail). |
| | | | If (ImageProjectionType == EQUIRECTANGULAR), then Textures/images is a Equirectangular image/video. |
| Size | Vec2f | | Format of the size of the image |
| } | | | |

Table 6 provides details of values assigned to different light types.

**Table 6.**

| **Light Type** | **Description** |
|---|---|
| TYPE_POINT_LIGHT = 0 | Capture all Point lights |
| TYPE_SPOT_LIGHT = 1 | Capture all Spot lights |
| TYPE_DIRECTIONAL_LIGHT= 2 | Capture all Directional lights |
| TYPE_ENV_LIGHT = 3 | Capture the Env Light |
| TYPE_AREA_LIGHT = 4 | Capture all Area Lights |

Table 7 provides details of values assigned to different projection types. For some embodiments, the image projection type of EnvLight must be defined. See the description of Textures/lmages in Table 5.

**Table 7.**

| **Image Projection type** | **Description** |
|---|---|
| CUBE_MAP = 0 | an array of 6 images is used |
| EQUIRECTANGULAR = 1 | latitude-longitude radiance map is used |

Table 8 provides details of values assigned to different refresh occurrence rates. The refresh occurrence rate may be received during configuration process or set by the UE (if the UE is to extract light data). Light data is transmitted when an update occurs. This occurrence value will be considered in all scenarios including when the data will not be transmitted. In some embodiments, different values of refresh occurrence may be logically combined (e.g., EVERY_FRAME AND EVENT_BASED). In some embodiments, data is transmitted only when a value changes.

**Table 8.**

| **Refresh Occurrence** | **Description** |
|---|---|
| NONE = 0 | Light parameters are supposed to be static |
| EVERY_FRAME = 1 | Light parameters are refreshing every frame |
| EVERY_N_FRAMES = 2 | Light parameters are refreshing every N frame |
| EVENT_BASED = 3 | Light parameters are refreshing when an event occurs. The events are managed by the application that starts the light data extraction when one of these events occurs. |

### Configuration Message Format: Raw Data

The format of the Configuration Message shown in Table 9 is used if raw data is to be transmitted. Configuration parameters are negotiated between the UE and server. This negotiation includes defining common XR spaces and defining data that is transmitted to the server for lights extraction. The format is capable of being extended to support the exchange of additional/future configuration information.

The configuration is done during XRSpatial downlink and uplink delivery session. See FIG. 3. The configuration format describes the data format. For example, in TS 26.565, the message may be identified by an urn: "urn:3gpp:xxxxxx-:xx:configurerawdata". Table 9 provides details on the parameters/format of a configuration message with raw data.

**Table 9.**

| **Name** | **Type** | **Cardinality** | **Description** |
|---|---|---|---|
| RefreshOccurrence | enum | 1..1 | One of the defined values of Table 8 |
| xrSpace | ID | 1..1 | ID of the XRSpace used to express the 3D coordinates of the pose |
| RawDatas | Array | 1..1 | Array of datas used by the server to extract light data. |
| RawData | Object | | See Table10. |

Table 10 provides details regarding a RawData object. In some embodiments, pose may be extracted from an image.

**Table 10.**

| **Name** | **Type** | **Cardinality** | **Description** |
|---|---|---|---|
| texture | image | 1..1 | Array of images used for extraction (may be done from one image or from a set of images) |
| pose | Array (16 floats) | 1..1 | view poses used for extraction. It's the pose of the camera relative to an xrSpace. |
| size | Vec2 | 1..1 | Size of the texture |
| timestamp | time information | 1..1 | timestamp (associated to image capture). Time information may be a string (date:time AAAA:MM:JJ:HH:MN:SS:MS) or a number |

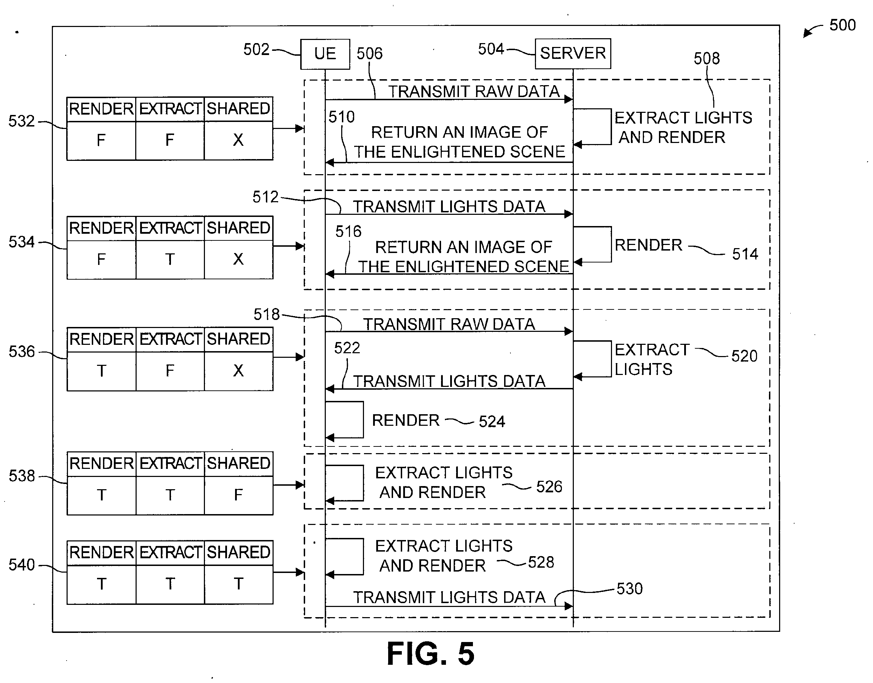

FIG. 5 is a message sequencing diagram illustrating an example process for light data transmission scenarios according to some embodiments. Depending on the configuration, FIG. 5 shows the call flow 500 at runtime between a UE and a server. The scenario boxes 532, 534, 536, 538, 540 indicate a particular scenario/configuration.

For the Render configuration item, "T" or true indicates that rendering is done by the UE; "F" or false indicates that rendering is done by Server. For the Extract configuration item, "T" or true indicates that extraction is done by the UE; "F" or false indicates that extraction is done by Server. For the Shared configuration item, "T" or true indicates that light data is transmitted from the UE to Server; "F" or false indicates that light data is not transmitted. An "X' indicates a "don't care" state.

For the Render = F, Extract = F, and Shared = X scenario 532, raw data is transmitted 506 from the UE 502 to the server 504. Light data is extracted 508, and the virtual scene with light data is rendered by the server 504. The server 504 returns 510 an image of the enlightened scene to the UE 502.

For the Render = F, Extract = T, and Shared = X scenario 534, light data is transmitted 512 from the UE 502 to the server 504. The server 504 renders 514 the light data. The server 504 returns 516 an image of the enlightened scene to the UE 502.

For the Render = T, Extract = F, and Shared = X scenario 536, raw data is transmitted 518 from the UE 502 to the server 504. The server 504 extracts 520 the light data. The server 504 transits 522 light data to the UE 502. The UE 502 renders 524 the light data.

For the Render = T, Extract = T, and Shared = F scenario 538, the UE 502 extracts 526 and renders the light data.

For the Render = T, Extract = T, and Shared = T scenario 540, the UE 502 extracts 528 and renders the light data. The UE transmits 530 the light data to the server.

### RunTime Message Format: Light Data

This format of the RunTime Message is used if light data is to be transmitted. Depending on the configuration process, the client on the XR device (UE) or the server periodically transmits a set of light data. For example, in *TS* 26.565, the message may be identified by an urn: "urn:3gpp:xxxxxx-:xx:lightdata".

The payload of the message is as shown in Table 12. During runtime, the value of the parameter is transmitted. The message format is in JSON format. See the code listing example in Table 11.

**Table 11.**

| |
|---|
| "intensity": 0.7, |

Table 12 shows the format for a LightDatas array and a LightData object.

**Table 12.**

| **Name** | **Type** | **Cardinality** | **Description** |
|---|---|---|---|
| LightDatas | Array | 1..1 | Array of light |
| LightData | Object | | See Table 5. |

The pose of the extracted lights is expressed in a reference frame specified by an ID (xrSpace), and the XR Space is set during configuration. The array LightDatas is specified in Table 4, and the object LightData is specified in Table 5. For some embodiments, the pose of a light source (or just "pose" for some embodiments) is defined via the xrSpace identifier in Table 4 and the LightData array and the LightData object in Table 5.

### RunTime Message Format: Raw Data

This format of the RunTime Message is used if raw data is to be transmitted. The client on the XR device periodically transmits a set of data to the server to extract light. For example, in *TS 26.565,* the message may be identified by an urn: "urn:3gpp:xxxxxx-:xx:rawdata".

The payload of the Raw Data message is shown in Table 13. In some embodiments, only one texture, pose, and time stamp are transmitted.

**Table 13.**

| **Name** | **Type** | **Cardinality** | **Description** |
|---|---|---|---|
| RawDatas | Array | 1..1 | Array of data used by the server to extract light data. |
| RawData | Object | | See Table 10. |

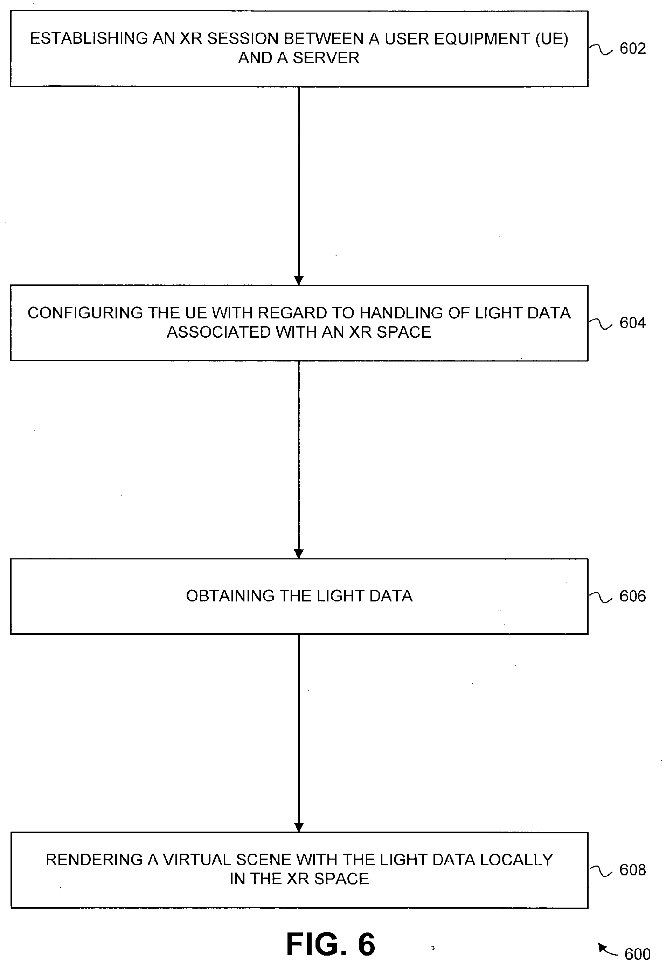

FIG. 6 is a flowchart illustrating an example process for configuring a user equipment device according to some embodiments. For some embodiments, an example process 600 may include establishing 602 an XR session between a user equipment (UE) and a server. For some embodiments, the example process 600 may further include configuring 604 the UE with regard to handling of light data associated with an XR space. For some embodiments, the example process 600 may further include obtaining 606 the light data. For some embodiments, the example process 600 may further include rendering 608 a virtual scene with the light data locally in the XR space.

An example method in accordance with some embodiments may include: establishing an XR session between a user equipment (UE) and a server; configuring the server with regard to handling of light data associated with an XR space; obtaining the light data; and rendering, by the server, the virtual scene with the light data locally in the XR space.

For some embodiments of the example method, establishing the XR session is based on capabilities of the UE.

For some embodiments of the example method, establishing the XR session is responsive to receiving a request from the UE.

For some embodiments of the example method, configuring the server comprises: determining that enlightening of the virtual scene by real light sources is required; determining that rendering of the virtual scene with the light data will be done by the server; determining that extraction of the light data will be done by the server; and configuring the server to extract the light data.

For some embodiments of the example method, obtaining the light data comprises extracting the light data by the server.

For some embodiments of the example method, configuring the server comprises: determining that enlightening of the virtual scene by real light sources is required; determining that rendering of the virtual scene with the light data will be done by the server; and determining that extraction of the light data will be done by the UE.

For some embodiments of the example method, obtaining the light data comprises receiving the light data from the UE.

For some embodiments of the example method, configuring the UE further comprises: determining that the light data will be shared; and configuring the server to receive the light data.

Some embodiments of the example method may further include receiving the light data from the UE.

For some embodiments of the example method, the light data comprises a lighting model corresponding to at least one object associated with the XR space.

Some embodiments of the example method may further include determining a lighting model corresponding to at least one object associated with the XR space.

For some embodiments of the example method, the lighting model corresponds to a light in a group consisting of: a point light, a spot light, a directional light, an environmental light, and an area light.

For some embodiments of the example method, the XR space is associated with an immersive environment.

An example apparatus in accordance with some embodiments may include: a processor; and a memory storing instructions operative, when executed by the processor, to cause the apparatus to perform any one of the methods listed above.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method/apparatus in accordance with some embodiments may include: establishing an XR session between a user equipment (UE) and a server; configuring the UE with regard to handling of light data associated with an XR space; obtaining the light data; and rendering a virtual scene with the light data locally in the XR space.

For some embodiments of the example method, establishing the XR session is based on capabilities of the UE.

For some embodiments of the example method, establishing the XR session is responsive to receiving a request from the server.

For some embodiments of the example method, configuring the UE comprises: determining that enlightening of the virtual scene by real light sources is required; determining that rendering of the virtual scene with the light data will be done by the UE; determining that extraction of the light data will be done by the server; and configuring the UE to receive the light data from the server.

For some embodiments of the example method, obtaining the light data comprises receiving the light data from the server.

For some embodiments of the example method, configuring the UE comprises: determining that enlightening of the virtual scene by real light sources is required; determining that rendering of the virtual scene with the light data will be done by the UE; and determining that extraction of the light data will be done by the UE.

For some embodiments of the example method, obtaining the light data comprises extracting the light data locally by the UE.

For some embodiments of the example method, configuring the UE further comprises: determining that the light data will be shared; configuring the UE to transmit the light data to the server.

Some embodiments of the example method may further include transmitting the light data to the server.

Some embodiments of the example method may further include transmitting the light data to another device.

For some embodiments of the example method, the light data comprises a lighting model corresponding to at least one object associated with the XR space.

Some embodiments of the example method may further include determining a lighting model corresponding to at least one object associated with the XR space.

For some embodiments of the example method, the lighting model corresponds to a light in a group consisting of: a point light, a spot light, a directional light, an environmental light, and an area light.

For some embodiments of the example method, the XR space is associated with an immersive environment.

An example method/apparatus in accordance with some embodiments may include: a processor; and a memory storing instructions operative, when executed by the processor, to cause the apparatus to perform the any one of the methods listed above.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
establishing an extended reality (XR) session between a user equipment (UE) and a server;
configuring the UE with regard to handling of light data associated with an XR space;
obtaining the light data; and
rendering a virtual scene with the light data locally in the XR space.

2. The method of claim 1, wherein establishing the XR session is based on capabilities of the UE.

3. The method of claim 1, wherein establishing the XR session is responsive to receiving a request from the server.

4. The method of any one of claims 1-3, wherein configuring the UE comprises:
determining that enlightening of the virtual scene by real light sources is required;
determining that rendering of the virtual scene with the light data will be done-by the UE;
determining that extraction of the light data will be done by the server; and
configuring the UE to receive the light data from the server.

5. The method of claim 4, wherein obtaining the light data comprises receiving the light data from the server.

6. The method of any one of claims 1-3, wherein configuring the UE comprises:
determining that enlightening of the virtual scene by real light sources is required;
determining that rendering of the virtual scene with the light data will be done by the UE; and
determining that extraction of the light data will be done by the UE.

7. The method of claim 6, wherein obtaining the light data comprises extracting the light data locally by the UE.

8. The method of any one of claim 6-7, wherein configuring the UE further comprises:
determining that the light data will be shared; and
configuring the UE to transmit the light data to the server. I

9. The method of claim 8, further comprising transmitting the light data to the server.

10. The method of claim 8, further comprising transmitting the light data to another device.

11. The method of any one of claims 1-10, wherein the light data comprises a lighting model corresponding to at least one object associated with the XR space.

12. The method of any one of claims 1-11, further comprising determining a lighting model corresponding to at least one object associated with the XR space.

13. The method of any one of claim 11-12, wherein the lighting model corresponds to a light in a group consisting of: a point light, a spot light, a directional light, an environmental light, and an area light.

14. The method of any one of claims 1-13, wherein the XR space is associated with an immersive environment.

15. An apparatus comprising:
a processor; and
a memory storing instructions operative, when executed by the processor, to cause the apparatus to perform the method of any one of claims 1 through 14.
